# EUROPEAN PATENT SPECIFICATION

(11) **EP 0 671 556 B1**
(45) Date of publication and mention of the grant of the patent: **04.11.1998**
(21) Application number: 95103304.2
(22) Date of filing: 08.03.1995
(51) Int. Cl.: F02D 41/34, F02D 41/26, F02D 41/10

(54) **A device for controlling fuel injection in an internal combustion engine**
Einrichtung zur Steuerung der Kraftstoffeinspritzung einer Brennkraftmaschine
Dispositif pour commander l'injection de carburant dans un moteur à combustion interne

(30) Priority: 10.03.1994 IT TO940168
(43) Date of publication of application: 13.09.1995
(73) Proprietor: MAGNETI MARELLI S.p.A., 20145 Milano (IT)
(72) Inventor: Ferrara, Riccardo, I-10073 Cirie (Torino) (IT)
(74) Representative: Quinterno, Giuseppe

(56) References cited:
- EP-A- 0 507 501
- WO-A-91/01443
- WO-A-94/01669
- DE-A- 4 107 353
- FR-A- 2 626 936
- US-A- 5 003 953

## Description

The present invention relates to a device commonly known as injection- and/or ignition-control unit, for controlling fuel injection in an internal combustion engine, of the kind defined in the preamble of Claim 1. In particular, the invention has been developed specifically, but not exclusively, to solve the problem of controlling the duration of a fuel-injection period during a transient condition of the speed of rotation of the engine.

FR-A-2 626 936 discloses a fuel injection system of that kind in which an injection for a specific cylinder can be performed with a basic amount and an additional amount, the latter amount being injected with a second injection which finishes when the calculated injection amount has been reached. When a certain angle of rotation of the engine shaft is detected, said second injection is interrupted before the total calculated amount has been reached.

WO-A-91 01 443 teaches a sequential fuel injection process in which when a predetermined injection angle has been reached, crankshaft angle increment signals are generated and these increments are counted in relation to a reference signal and are used to determine whether an injection angle, expressed as an increment value, has been reached. Immediately this is ascertained, the injection operation associated with this increment value is executed, i.e. injection is either started or stopped.

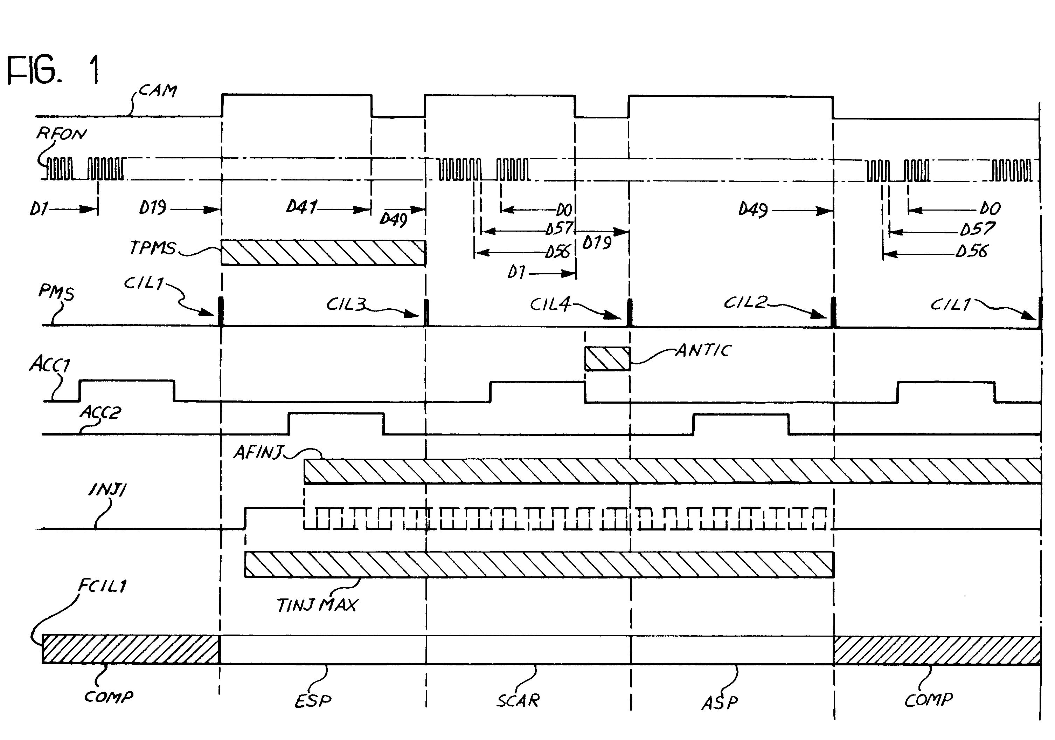

For a better understanding, the operation and the set of signals of a four-cylinder internal combustion petrol engine having an electronic injection system will now be described with reference to Figure 1. Figure 1 shows the time graphs of the various signals relating to the control of the opening and closure of a petrol-metering valve (an injector). As is known, electronic injection systems comprise one or more devices such as, for example solenoid valves, which are operated by an electronic control unit and have the function of controlling the injection of fuel into the cylinders of the engine.

The first two signals CAM and RFON shown provide the control unit with data relating to the position of the engine shaft and the cylinders of the engine in their various phases. The signal CAM is in fact a square-wave signal generated by a sensor associated with a toothed wheel rotated by a camshaft of the timing system of the engine; the signal RFON is also a square-wave signal generated by a phonic wheel sensor including a toothed wheel rotated by the engine shaft. These signals CAM, RFON enable the control unit to know the position of the engine shaft and of the cylinders as well as their phases in the operating cycle at any moment.

As can be seen from the graph, this information can be derived from the wave fronts of the two signals CAM, RFON. For example, the top-dead-centre points of the various cylinders are identified by the teeth 19 and 49 of the phonic wheel. In Figure 1, the pulses corresponding to the teeth which identify predetermined positions of the engine shaft are identified by the references D followed by a number (in the specific case, D0, D1, D19, D41, D49, D56, D57). As can be seen from the signal RFON, the phonic wheel does not have a complete set of teeth (60) but, for example, lacks two teeth in a predetermined position so as to provide the control unit with an angular position reference. The control unit can therefore derive from the two signals CAM, RFON (in known manner) a pulsed signal PMS indicative of the top-dead-centre points of the various cylinders, indicated CIL1, CIL2, CIL3, CIL4. The time interval elapsing between two successive passages through a top-dead-centre point is also shown in the drawing and indicated TPMS.

The drawing then shows two signals ACC1 and ACC2 which are used to generate the ignition pulses in pairs of cylinders. The ignition advance with respect to the passage through the top-dead-centre point is indicated ANTIC.

Finally, the signal for controlling the duration of the fuel injection in cylinder 1 is indicated INJ1. As will be seen from the graph, this signal INJ1 is represented by a multiple set of trailing edges, since its duration is not fixed but varies according to the quantity of petrol to be introduced into the cylinder 1. In fact, the time AFINJ, which is the time interval between the closure of the injector of cylinder 1 and the passage through top dead centre in cylinder 1, that is, the injection phase angle, and the time TINJMAX, which represents the maximum duration of the injection for the cylinder 1 are indicated above and below the signal INJ1. The various phases of the cylinder 1, that is, compression COMP, expansion ESP, exhaust SCAR and induction ASP are indicated FCIL1 and shown at the bottom of the drawing.

The duration of the time when the injector is open, and consequently the quantity of petrol injected into the cylinder, is determined by the control unit on the basis of the aperture of a throttle valve which, typically, is controlled by the position of an accelerator pedal.

When a transient condition of the throttle valve, that is, a rapid change of the aperture of the throttle valve occurs, there may be a need to modify the quantity of petrol to be injected. A positive modification may result in an extension of the current injection period, if the injector is open, or in a reopening of the injector, and thus a so-called extra injection. The extra injection is therefore an injection pulse which is supplied in synchronism with the set of signals and the duration of which depends on the variations of the air flow in the intake manifold which require an increase in the quantity of fuel injected.

Essentially, the extra injection is another pulse to be given in the same engine revolution, in addition to the injection pulse already given. This extra injection pulse, however, must keep rigorously to one phase even if the injection time required is such as to cause the injector to close beyond this phase. This causes a technical problem. In fact, the injection-control devices of the prior art operate according to one or other of the two methods which will now be described.

The two methods of generating pulses which control the opening of the injector are the so-called time-priority and angle-priority methods.

The time-priority method permits the generation of pulses which, once initiated, end so as to conform to a preset duration. This method also permits modifications of the injection duration or time during the stage in which the control pulse is high and the injector is therefore open. In this method, the final angle of the maximum injection period TINJMAX is used only to calculate the moment at which the rising edge of the injection-control pulse should start. This means that, if the speed of rotation of the engine changes in the course of the extra injection, fuel injection may occur after the final injection phase angle provided for, which has adverse consequences.

The second method, that is, the angle-priority method, however, permits the generation of pulses which keep to the final angle of the period TINJMAX but do not accept changes of the duration of the period in which the control signal is high once the rising edge of the pulse has been generated. In this case, therefore, it is ensured that, when accelerations or decelerations of the speed of rotation of the engine occur, the injection in any case ends at the final angle. However, this means that, if the speed of rotation of the engine changes in the course of the extra injection, the duration of the injection is longer or shorter than the time provided for and the quantity of fuel injected consequently differs from that calculated.

The object of the present invention is to provide a device for controlling fuel injection in an internal combustion engine which enables the problems indicated above to be solved in a satisfactory manner.

According to the present invention, this object is achieved by virtue of a control device having the features defined in claim 1 which follows the present description.

Further advantages and characteristics of the present invention will become clear from the following detailed description, given with the aid of the appended drawings, provided by way of non-limiting example, in which:
Figure 1 has already been described with reference to the prior art,
Figures 2, 3, 4 and 5 are graphs illustrating aspects of the operation of the device according to the invention.

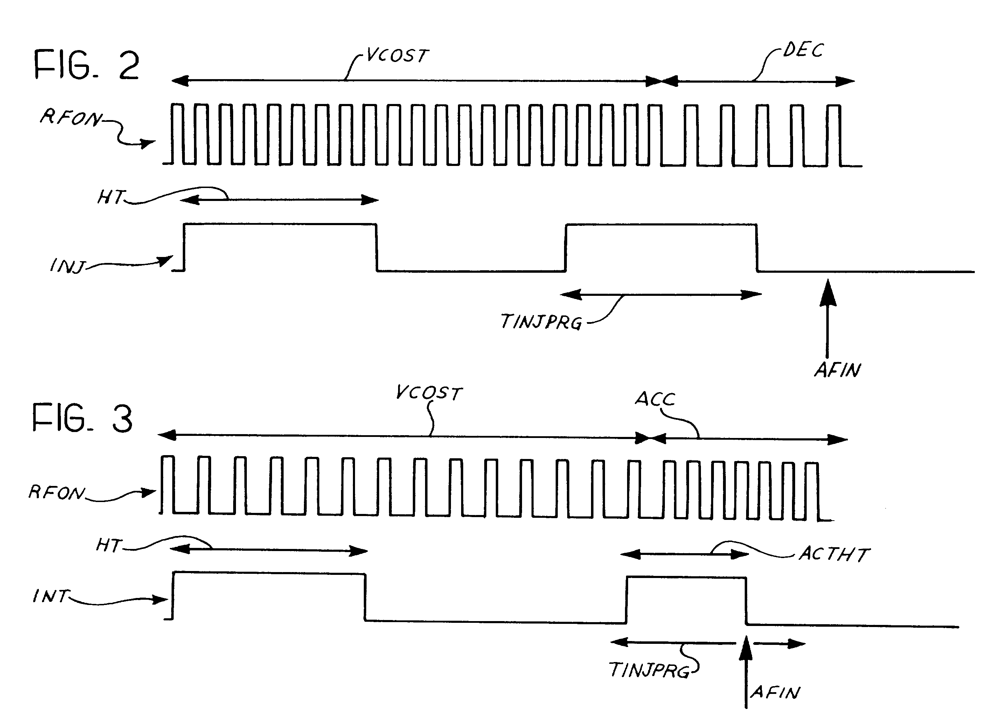

The present invention consists essentially of a control device which is configured for operating by a method which differs from the methods of the prior art, but which combines their characteristics and will also be referred to below as a mixed method. An embodiment of the invention will now be described in detail with reference to Figures 2 to 5.

The control device according to the invention is essentially an electronic circuit which can process logic signals (that is, on/off signals) and has a communication (or I/O) section which can generate and detect signal edges and associate with each edge a precise moment in time which corresponds to the value of a time-base generator or timer with which the device is provided.

The device operates by a method which, typically, is described by a microcode, by means of which a user can set in the device the sequences of operations to be carried out in order to generate a signal in time or to effect a time measurement. Typically, the device is therefore a microprocessor device and also contains an arithmetic-logic unit (or ALU) which can do the necessary calculations to generate output signals and process input signals.

As already stated, the device is configured for operating by a method which is a third method between the angle-priority method and the time-priority method. This method, or mixed method, is a modified form of the time-priority method. In fact, the extra-injection control pulse starts with the same characteristics as a time-priority pulse but may end either as a time-priority pulse or as an angle-priority pulse, following an implementation strategy which selects the earlier of the two events as the injection-closure edge. This strategy therefore corresponds to a logic conjunction (OR) of the two injection-termination conditions of the prior art. According to this method, the pulse phase is never exceeded.

The mixed method thus permits optimal control of the extra injection.

The variables upon which the times for the actuation of the edges of the injection-control pulse are calculated will now be described.

The parameters set by the user to describe the injection-control pulse INJ (see Figures 2, 3, 4, 5) to be generated are essentially as follows:
HIGH_TIME = the time during which the signal INJ remains at a high logic level;
END_ANGLE = the angular position by which the pulse INJ should end.

The variables used for the calculation, on the other hand, are:
END_TIME = the time from the current time to the trailing edge of the signal INJ;
PERIOD = the time measured between two teeth of the phonic wheel;
LAST_TRANSITION = the timer value of the device at the moment of the last transition of an engine signal input;
RISING_EDGE_TIME = the timer value at the moment when the rising edge of the signal INJ is generated; and
COUNT_MOD = counter module N-2 of the tooth pulses of the input signal RFON per engine cycle.

A calculation function of the device is activated for each tooth pulse of the input signal RFON and, upon each activation, calculates when to generate the edges of the output signal. If the output signal is low the following calculation is activated for each "tooth" of the input signal:
1) calculation of the moment at which to generate the rising edge:
This moment in time is calculated by subtracting the time during which the pulse must remain high (the HIGH_TIME) from the moment at which the final angle occurs (the END_TIME). The END_TIME is the time which passes from the last transition of the signal RFON (LAST_TRANSITION) to the closure of the pulse. The TIME_TO_START is the time, from the last transition of the signal RFON, at which the rising edge must be generated, calculated by subtracting the time during which the pulse must remain high from the closure time of the pulse.
TIME_TO_START = END_TIME - HIGH_TIME
The following strategy is then applied:
if the TIME_TO_START > 0, then the pulse is generated at the moment:
LAST_TRANSITION + TIME_TO_START.
Otherwise, the pulse is generated immediately.
When the rising edge of the pulse is generated, the timer value relating to the moment at which the edge is generated is stored as the RISING_EDGE_TIME variable and this time is taken as the reference for the subsequent trailing edge.
When the pulse is active, the following calculation is activated for each "tooth" of the input signal RFON:
2) calculation of the moment at which to generate the trailing edge:
Starting from when the pulse is high, the moment at which to generate the trailing edge is recalculated for each "tooth" of the input signal RFON. This calculation is more complex since it involves two different calculations of the closure time: one for the angle-priority case and one for the time-priority case.
The timer value at which the trailing edge is generated in order to conform to the angle is then calculated; for angle priority, this is calculated, as for the original function, by the following formula:
TIME_TO_END = (END_ANGLE - CURRENT TOOTH) * PERIOD
With angle priority, the closure-edge time is thus calculated by adding the time required in order to reach the angular position specified for the closure of the pulse (the trailing edge) to the moment at which the last transition in the signal RFON occurs.
The timer value at which the trailing edge is generated in order to comply with the time, that is, for time priority is then calculated:
END_POSITION_TIME_PRIORITY = RISING_EDGE_TIME + HIGH_TIME.
At this point the trailing edge to be generated is selected as that which is closest to the rising edge of the pulse, so that the pulse which remains at the high level for the least time is generated:
if
(END_POSITION_ANGLE_PRIORITY - RISING_EDGE_TIME) < (END_POSITION_TIME_PRIORITY - RISING_EDGE_TIME)
then:
END_POSITION_OR_PRIORITY = END_POSITION_ANGLE_PRIORITY
otherwise:
END_POSITION_OR_PRIORITY = END_POSITION_TIME_PRIORITY
The pulse relating to the trailing edge is generated at the moment specified as the END_POSITION_OR_PRIORITY variable.
3) When the pulse is high, the device can revise the injection time and this time is taken into consideration upon the next activation of the calculation at point 2.
4) This function provides the state data necessary to control the injection process. The device writes the requirement for an extra pulse as a variable in a parameters memory.
When the device requires a normal injection it writes in the parameters memory "normal injection in progress". When the pulse is generated the device writes in the parameters memory "normal injection finished". When the device requires an extra injection, it writes in the parameters memory "extra injection in progress". When the device has generated the extra injection pulse, it writes in the parameters memory "extra injection finished".
The device can decide how to increase the quantity of petrol to be injected for each of these 4 values according to the following decision table:

| CONDITION | ACTION |
|---|---|
| "normal injection in progress" | - modify TINJ |
| "normal injection finished" | - set an extra injection |
| "extra injection in progress" | - modify TINJ for the injection in progress |
| "extra injection finished" | - wait for programming of new base injection |

For each trailing edge:
5) the function resets in the device the HIGH time actually implemented:
Actual HIGH time = the timer value at the trailing edge time - the timer value at the rising edge time RISING_EDGE_TIME of the injection control pulse INJ.
6) The mixed method according to the present invention should be considered as an extension of the time-priority method and it should therefore be possible to change the operating method from time priority to mixed priority according to the invention even when the function is already activated, that is useful when it is desirable to increase the injection time without "breaking out of" the phase.

During deceleration, the trailing edge is generated like the trailing edge in the case of time priority. During acceleration, the trailing edge is generated like a trailing edge in the case of angle priority. This can be seen, for example, in Figure 2 which shows, in addition to the normal pulse HT of the injection signal INJ, an extra injection pulse of duration TINJPRG equal to the duration calculated. This occurs because, if the initially-constant speed VCOST undergoes a deceleration DEC, the final angle AFIN moves further away in time and the device can therefore operate with time priority.

The HIGH_TIME value can be altered when the pulse INJ is high. A negative variation of the HIGH_TIME at constant speed causes the function to behave as in the case of deceleration, keeping to the time actuation and closing before the final angle, whereas a positive variation of the injection time causes the function to behave as in the case of acceleration, keeping to the final angle, to the detriment of the injection time.

The first injection is a normal injection and the second is an extra injection which is always limited to the END_ANGLE position even when the injection time is increased, which may occur with the injector open. This can be seen, for example, in Figure 3, which is the same as Figure 2 with the only difference that the speed undergoes an acceleration ACC. In this case, the pulse INJ is nevertheless ended by the device at the final angle AFIN. The actual duration of the pulse INJ thus becomes ACTHT and not TINJPRG since, in this case, the device operates with angle priority.

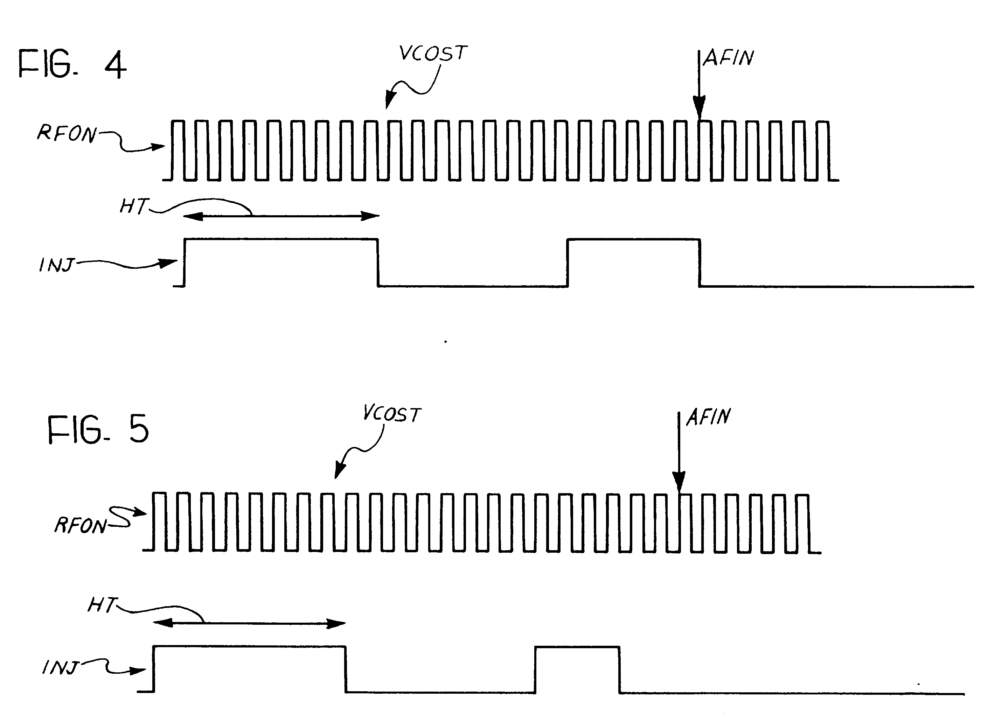

Figure 4, on the other hand, shows the case in which the first injection is a normal injection HT and the second is an extra injection calculated so as to end at the final angle AFIN. If the injection time is decreased, as shown in Figure 5, with the injector open, however, an extra injection pulse with a duration equal to the new injection time takes place and may therefore finish before the final angle AFIN.

A practical example will now be described.

The times specified in the example are considered in µsec units. The timer resolution is 1 µsec/bit.
- CURRENT TOOTH =: 34
- LAST_TRANSITION =: 2456 µsec (counter 16 bits without sign)
- PERIOD =: 250 µsec
- END_ANGLE =: 45.75 (tooth 45 * 75% of 6 degrees = 274.5 degrees)
- HIGH_TIME =: 2000 µsec.

1) Starting at tooth 34, the injection-control pulse is still low and the rising-edge time must be calculated.
   The rising edge is calculated at
   LAST_TRANSITION + ((END_ANGLE - CURRENT_TOOTH) * PERIOD) - HIGH_TIME) = (2456 + 11.75*250) - 2000 = 3393.
   The rising edge is therefore programmed at the moment at which the timer reaches the value 3393.
   This calculation is activated for each "tooth" of the input signal RFON until the transition of the signal from low to high takes place.
   When the rising-edge transition of the pulse takes place, the timer value, that is, 3393 is stored as the RISING_EDGE_TIME variable.
   Upon the assumption that the speed is constant and that the HIGH_TIME does not change until the pulse is high: the pulse is therefore generated at the moment:
   RISING_EDGE_TIME = 2456+(((45.75-34)*250)-2000) = 3393.
2) Two types of transient state may occur whilst the pulse is high:
   i) Variation of the period
   ii) Injection time.

### Variation of the period:

### Acceleration:

The period is decreased as a result of an acceleration, the new value is 200 µsec.

The following calculations are carried out with the use of the algorithm described above:

It is assumed that the signal is high and that the time is the moment 4 after the tooth 37. The closure time is calculated with angle priority:
TIME_TO_END = (45.75-37)*200 = 1750.

The counter value at which a trailing edge is programmed is:
END_POSITION_ANGLE_PRIORITY = LAST_TRANSITION + TIME_TO_END.

The variation of the period took place in the last period, therefore LAST_TRANSITION = 3156.
END_POSITION_ANGLE_PRIORITY = 3156 + 1750 = 4906.

The closure time is calculated with time priority:
END-POSITION-TIME-PRIORITY = RISING-EDGE-TIME +
HIGH_TIME.
END_POSITION_TIME_PRIORITY = 3393 + 2000 = 5393.

By carrying out the check described in point 2 for the mixed method, the closure time selected for implementation is the timer value stored as END_POSITION_ANGLE_PRIORITY since this is the closure position which ensures that the angle specified for the closure is not passed. This is the case of Figure 3.

### Deceleration:

In the case of deceleration, however, the closure time selected is the value of the END_POSITION_TIME_PRIORITY variable relating to the time priority calculation. This is the case of Figure 2.
Injection-time (HIGH_TIME) variation :

### Decrease of the injection time:

The injection time has been modified whilst the signal is high at a moment in time near to the tooth 37.
Old injection time value = 2000 µsec
New injection time value = 1500 µsec.

The following calculations are carried out with the use of the algorithm described above:

It is assumed that the signal is high and the tooth 37 has passed.

The closure time is calculated with angle priority:
TIME_TO_END = (45.75 - 37)*250 = 2187.

The counter value at which the trailing edge is programmed is:
END_POSITION_ANGLE_PRIORITY = LAST_TRANSITION + TIME_TO_END.

The period has remained constant, therefore
LAST_TRANSITION = 2456+(37-34)*250 = 3206.
END_POSITION_ANGLE_PRIORITY = 3206 + 2187 = 5393.

The closure time is calculated with time priority:
END_POSITION_TIME_PRIORITY = RISING_EDGE_TIME + HIGH_TIME.
END_POSITION_TIME_PRIORITY = 3393 + 1500 = 4893.

By carrying out the priority check explained in point 2, the closure moment selected for implementation is the timer value stored in END_POSITION_TIME_PRIORITY since this is the closure position which ensures that the required time is implemented without going beyond the final angle. This is the case of Figure 5.

### Increase in the injection time:

If, on the other hand, there has been an increase in the injection time, the closure time selected is the value of the END_POSITION_ANGLE_PRIORITY variable and this is the case of Figure 4.

## Claims

1. A device for controlling fuel injection in an internal combustion engine, in which the device is configured to generate, in a predetermined interval (TINJMAX) of the rotation of an engine shaft of the internal combustion engine:
- a first injection-activation pulse (HT),
- a second injection-activation pulse when it becomes necessary to inject an additional quantity of fuel into a given cylinder of the engine during the predetermined rotation interval (TINJMAX),
the device being adapted to calculate a duration (TINJPRG) of the second pulse suitable for injecting the additional quantity of fuel into the cylinder,
the device being configured to terminate the second injection-activation pulse upon the occurrence of the earlier of the following two events:
- the reaching of the end (AFIN) of the predetermined rotation interval (TINJMAX),
- the reaching of the end of the calculated duration (TINJPRG);
the device being characterised in that it includes a sensor for generating a pulsed logic signal (RFON) indicative of the angular position of the engine shaft; the device being further characterised in that it is configured to:
- calculate the time at which the second activation pulse starts for each pulse of the logic signal (RFON) which is indicative of the angular position of the engine shaft,
- to activate the injection when the start time of the second activation pulse is reached,
- to store the start time of the second activation pulse;
- calculate an end time of the second activation pulse by adding the duration calculated (TINJPRG) to the start time stored,
- to calculate a final angular position of the engine shaft for the second activation pulse on the basis of the start time stored and on the basis of the logic signal (RFON) which is indicative of the angular position of the engine shaft,
- to end the second activation pulse upon the occurrence of the earlier of the following two events:
- the reaching of the end time of the second activation pulse,
- the reaching of the final angular position (AFIN) for the second activation pulse.

2. A device according to Claim 1, characterized in that the final angular position (AFIN) for the second activation pulse is calculated for each pulse of the logic signal (RFON) which is indicative of the angular position of the engine shaft.

3. A device according to Claim 2, characterized in that the pulsed logic signal (RFON) which is indicative of the angular position of the engine shaft is generated by a rotation sensor associated with a phonic wheel which is rotated by the engine shaft, the pulses corresponding to teeth of the phonic wheel.

## Patentansprüche

1. Vorrichtung, um die Kraftstoffeinspritzung in einen Verbrennungsmotor zu steuern, wobei die Vorrichtung so aufgebaut ist, um in einem vorgegebenen Intervall (TINJMAX) der Drehung einer Motorwelle des Verbrennungsmotors zu erzeugen:
- einen ersten Einspritz-Aktivierungsimpuls (HT),
- einen zweiten Einspritz-Aktivierungsimpuls, wenn es notwendig wird, eine zusätzliche Menge von Kraftstoff in einen gegebenen Zylinder des Motors während des vorgegebenen Drehintervalls (TINJMAX) einzuspritzen,
wobei die Vorrichtung so aufgebaut ist, um eine Dauer (TINJPRG) des zweiten Impulses zu berechnen, die geeignet ist, um die zusätzliche Menge von Kraftstoff in den Zylinder einzuspritzen,
wobei die Vorrichtung so aufgebaut ist, um den zweiten Einspritz-Aktivierungsimpuls zu beenden, wenn das frühere der beiden folgenden Ereignisse eintritt:
- das Ende (AFIN) des vorgegebenen Drehintervalls (TINJMAX) erreicht wird,
- das Ende der berechneten Dauer (TINJPRG) erreicht wird;
wobei die Vorrichtung dadurch gekennzeichnet ist, daß sie aufweist:
einen Fühler, um ein Logikimpulssignal (RFON) zu erzeugen, das die Winkelstellung der Motorwelle angibt; wobei die Vorrichtung weiters dadurch gekennzeichnet ist, daß sie so aufgebaut ist, um:
- die Zeit, bei der der zweite Aktivierungsimpuls beginnt, für jedes Logiksignal (RFON) zu berechnen, das die Winkelstellung der Motorwelle angibt,
- die Einspritzung zu aktivieren, wenn die Beginnzeit des zweiten Aktivierungsimpulses erreicht ist,
- die Beginnzeit des zweiten Aktivierungsimpulses zu speichern;
- die Endzeit des zweiten Aktivierungsimpulses dadurch zu berechnen, daß die berechnete Dauer (TINJPRG) zur gespeicherten Beginnzeit addiert wird;
- eine Winkelendstellung der Motorwelle für den zweiten Aktivierungsimpuls aufgrund der gespeicherten Beginnzeit sowie aufgrund des Logiksignals (RFON) zu berechnen, das die Winkelstellung der Motorwelle angibt;
- den zweiten Aktivierungsimpuls zu beenden, wenn das frühere der beiden folgenden Ereignisse eintritt:
- die Endzeit des zweiten Aktivierungsimpulses erreicht wird,
- die Winkelendstellung (AFIN) für den zweiten Aktivierungsimpuls erreicht wird.

2. Vorrichtung gemäß Anspruch 1, dadurch gekennzeichnet, daß die Winkelendstellung (AFIN) für den zweiten Aktivierungsimpuls für jeden Impuls des Logiksignals (RFON) berechnet wird, das die Winkelstellung der Motorwelle angibt.

3. Vorrichtung gemäß Anspruch 2, dadurch gekennzeichnet, daß das Logikimpulssignal (RFON), das die Winkelstellung der Motorwelle angibt, von einem Drehfühler erzeugt wird, der einem Tonrad zugeordnet ist, das von der Motorwelle in Drehung versetzt wird, wobei die Impulse den Zähnen des Tonrads entsprechen.

## Revendications

1. Dispositif pour commander l'injection de carburant dans un moteur à combustion interne, dans lequel le dispositif est configuré pour générer, dans un intervalle prédéterminé (TINJMAX) de la rotation d'un arbre de moteur du moteur à combustion interne:
- une première impulsion d'activation d'injection (HT),
- une seconde impulsion d'activation d'injection lorsqu'il devient nécessaire d'injecter une quantité supplémentaire de carburant dans un cylindre donné du moteur pendant l'intervalle de rotation prédéterminé (TINJMAX),
le dispositif étant adapté pour calculer une durée (TINJPRG) de la seconde impulsion convenable pour injecter la quantité supplémentaire de carburant dans le cylindre,
le dispositif étant configuré pour terminer la seconde impulsion d'activation d'injection lors de l'existence du premier des deux événements suivants:
- l'atteinte de la fin (AFIN) de l'intervalle de rotation prédéterminé (TINJMAX),
- l'atteinte de la fin de la durée calculée (TINJPRG);
le dispositif étant caractérisé en ce qu'il comprend un capteur pour générer un signal logique impulsionnel (RFON) indicatif de la position angulaire de l'arbre du moteur;
le dispositif étant en outre caractérisé en ce qu'il est configuré pour:
- calculer l'instant auquel la seconde impulsion d'activation débute pour chaque impulsion du signal logique (RFON) qui est indicatif de la position angulaire de l'arbre du moteur,
- activer l'injection lorsque l'instant du début de la seconde impulsion d'activation est atteint,
- mémoriser l'instant du début de la seconde impulsion d'activation,
- calculer un instant de la fin de la seconde impulsion d'activation en ajoutant la durée calculée (TINJPRG) à l'instant du début mémorisé,
- calculer une position angulaire finale de l'arbre du moteur pour la seconde impulsion d'activation sur la base de l'instant du début mémorisé et sur la base du signal logique (RFON) qui est indicatif de la position angulaire de l'arbre du moteur,
- finir la seconde impulsion d'activation lors de l'existence du premier des deux événements suivants:
- l'atteinte de l'instant de la fin de la seconde impulsion d'activation,
- l'atteinte de la position angulaire finale (AFIN) pour la seconde impulsion d'activation.

2. Dispositif selon la revendication 1, caractérisé en ce que la position angulaire finale (AFIN) pour la seconde impulsion d'activation est calculée pour chaque impulsion du signal logique (RFON) qui est indicatif de la position angulaire de l'arbre du moteur.

3. Dispositif selon la revendication 2, caractérisé en ce que le signal logique impulsionnel (RFON) qui est indicatif de la position angulaire de l'arbre du moteur est généré par un capteur de rotation associé à une roue phonique qui est entraînée par l'arbre du moteur, les impulsions correspondant à des dents de la roue phonique.
